# EUROPÄISCHE PATENTSCHRIFT

(11) **EP 1 612 510 B1**
(45) Veröffentlichungstag und Bekanntmachung des Hinweises auf die Patenterteilung: **14.02.2007**
(21) Anmeldenummer: 05013064.0
(22) Anmeldetag: 17.06.2005
(51) Int. Cl.: G01B 21/04, B23Q 7/10

(54) **Vorrichtung zur Beschickung einer Koordinatenmessmaschine**
Device for charging a coordinate measuring machine
Dispositif pour alimenter un appareil de mesure de coordonnées

(30) Priorität: 23.06.2004 DE 202004009887 U
(43) Veröffentlichungstag der Anmeldung: 04.01.2006
(73) Patentinhaber: Junker & Partner GmbH, 66636 Tholey (DE)
(72) Erfinder: Junker, Franz-Rudolf, 66636 Tholey-Sotzweiler (DE); Huber, Alfred, 66571 Eppelborn (DE)
(74) Vertreter: Bernhardt, Winfrid

(56) Entgegenhaltungen:
- DE-A1- 3 229 327
- US-A- 5 626 454
- US-B1- 6 524 052

## Beschreibung

Die Erfindung betrifft eine Vorrichtung zur Beschickung einer Koordinatenmessmaschine mit Messobjekte tragenden Paletten, wobei die Vorrichtung eine Reihenanordnung von Haltern für die Paletten und eine entlang der Reihenanordnung bewegbare Transporteinrichtung zur Beförderung der Paletten von den Haltern zu der Koordinatenmessmaschine aufweist und die Paletten auf die bei dem betreffenden Halter angeordnete Transporteinrichtung überführbar sind. Eine derartige Vorrichtung ist beispielsweise in der DE-A-32 29 327 beschrieben.

Bei herkömmlichen, durch Benutzung bekannte Vorrichtungen solcher Art bereitet die Überführung der mitunter schweren, mit Messobjekten bestückten Paletten von den Haltern zur Messmaschine Schwierigkeiten. Insbesondere ist der sichere Halt der bestückten Paletten auf den Haltern und der Transporteinrichtung nicht gewährleistet.

Der Erfindung liegt die Aufgabe zugrunde, eine verbesserte Vorrichtung der eingangs erwähnten Art zu schaffen, welche eine sichere Lagerung der Paletten auf den Haltern und sichere Überführung von den Haltern auf die Transporteinrichtung und von der Transporteinrichtung zur Messmaschine ermöglicht.

Die diese Aufgabe lösende Vorrichtung nach der Erfindung ist gekennzeichnet durch eine die Transporteinrichtung in der jeweiligen Überführungsposition festlegende Verschlusseinrichtung.

Durch die Verschlusseinrichtung bleiben die Transporteinrichtung und die jeweiligen Halter während der Überführung sicher zueinander ausgerichtet. Es kann nicht zum Anstoßen oder Abrutschen von bestückten Paletten kommen.

In einer bevorzugten Ausführungsform der Erfindung lässt sich durch Betätigung der Verschlusseinrichtung eine die Palette auf dem betreffenden Halter festlegende Sperre automatisch öffnen. Mit der Festlegung der Transporteinrichtung an der Übergabeposition wird also automatisch die Sperre aufgehoben. An allen anderen Haltern können die Sperren, wenn die Transporteinrichtung an den jeweiligen Haltern vorbeiläuft, in einer solchen Konstruktion unbeeinflusst bleiben, so dass es nicht zu einer vorübergehenden Lösung der Sperre und damit zum Abrutschen von Paletten vom Halter kommen kann.

In weiterer Ausgestaltung der Erfindung weist die Verschlusseinrichtung ein quer zur Bewegungsrichtung der Transporteinrichtung in einer Führung an der Transporteinrichtung verschiebbares Verschlusselement auf, welches bei Eingriff in eine Öffnung an dem betreffenden Halter die Bewegung der Transporteinrichtung entlang der Reihenanordnung von Haltern verhindert.

Das Verschlusselement kann in einer vorgeschobenen Position ferner drehbar sein und die Sperre weist eine durch das Verschlusselement bei dessen Drehung verschwenkbare Sperrklinke auf. Durch Verschwenkung der Sperrklinke gelangt das obere Ende der Sperrklinke in eine Position unterhalb der Palette, so dass die Palette freigegeben ist.

In weiterer Ausgestaltung der Erfindung lässt sich durch Verschiebung des Verschlusselements ein die Verschwenkung der Sperrklinke verhinderndes Arretierungselement unter Freigabe der Sperrklinke verschieben. Ein solches Arretierungselement kann gegen die Rückstellkraft einer Feder verschiebbar sein. Die freigegebene Sperrklinke kann durch Drehung des Verschlusselements in die oben beschriebene Öffnungsposition verdreht werden.

In der bevorzugten Ausführungsform der Erfindung umfasst das Verschlusselement einen Verschlussbolzen mit einem bei Drehung des Verschlusselements die Sperrklinke verschwenkenden Ausleger. Der Ausleger greift entweder in eine Öffnung der Sperrklinke ein oder liegt gegen die Sperrklinke an.

Vorzugsweise fallen die Drehachse des Verschlusselements und die Schwenkachse der Sperrklinke zusammen.

In letzterer Ausführungsform ist die genannte Öffnung an dem betreffenden Halter, in welche das Verschlusselement eingreift, zweckmäßig durch eine zur Schwenkachse der Sperrklinke koaxiale Hülse gebildet. Die Hülse bildet eine Drehachse für die Sperrklinke.

Das genannte Arretierungselement kann bügelförmig ausgebildet sein, wobei ein Bügelschenkel in die Hülse eingreift und der andere Bügelschenkel zum Eingriff in eine im Abstand von der Schwenkachse angeordnete Öffnung in der Sperrklinke eingreift. Durch Verschiebung des einen Schenkels durch das vorgeschobene Verschlusselement wird der andere Schenkel aus der genannten Öffnung herausgezogen, so dass die Sperrklinke zur Verschwenkung in eine Öffnungsstellung freigegeben ist.

Eine weitere Sperre kann an der der Reihenanordnung zugewandten Seite der Transporteinrichtung vorgesehen sein, um auf die Transporteinrichtung überführte Paletten zu sichern. Auch diese Sperre kann eine Sperrklinke aufweisen, wobei die Sperrklinke vorzugsweise bei der Drehung des Verschlusselements gleichzeitig mit der erstgenannten Sperrklinke gegen die Rückstellkraft einer Feder verschwenkbar ist.

Weitere vorteilhafte Ausgestaltungsmöglichkeiten der Erfindung gehen aus den Ansprüchen 13 bis 16 hervor.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: eine schematische Darstellung einer Beschickungsvorrichtung nach der Erfindung in einer Draufsicht,
- Fig. 2: eine Querschnittsdarstellung gemäß Schnitt A-A von Fig. 1,
- Fig. 3: eine zu der Querschnittsdarstellung von Fig. 1 senkrechte, teilweise geschnittene Seitenansicht einer in der Vorrichtung von Fig. 1 verwendeten Transporteinrichtung, und
- Fig. 4 bis 7: Detaildarstellungen der Vorrichtung von Fig. 1, welche Sperrklinken zur Arretierung von Transportpaletten auf Haltern bzw. der Transporteinrichtung der Vorrichtung von Fig. 1 zeigen.

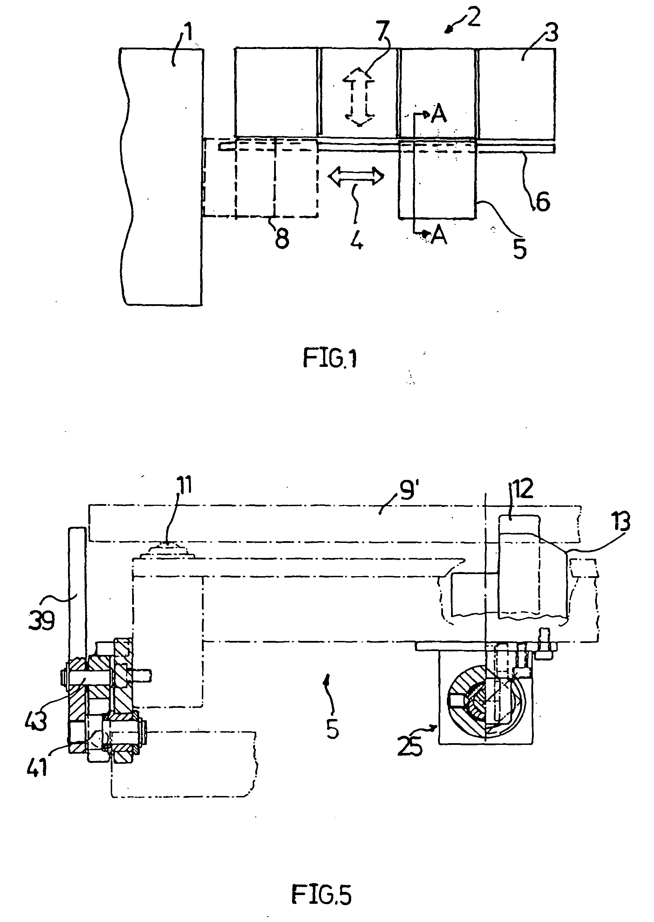

Gemäß Fig. 1 weist eine Vorrichtung zur Beschickung einer Koordinatenmessmaschine 1 eine Reihenanordnung 2 von Haltern 3 für Paletten auf, welche mit Messobjekten bestückt sind (Paletten und Messobjekte in Fig. 1 nicht gezeigt).

Gemäß Pfeil 4 ist entlang der Reihenanordnung 2 eine Transporteinrichtung 5 in Form eines Schlittens auf einer Schlittenführung 6 verschiebbar. Die Transporteinrichtung 4 lässt sich, wie in Fig. 1 gezeigt ist, zu jedem der Halter 3 ausrichten, um gemäß Pfeil 7 eine Palette von dem betreffenden Halter zu übernehmen oder auf den Halter zu überführen. Bei 8 sind weitere mögliche Positionen der Transporteinrichtung 5 durch Strichlinien angedeutet.

Es versteht sich, dass die gezeigte Anzahl von Haltern 3 nicht auf die in dem betreffenden Ausführungsbeispiel gezeigte Anzahl beschränkt ist.

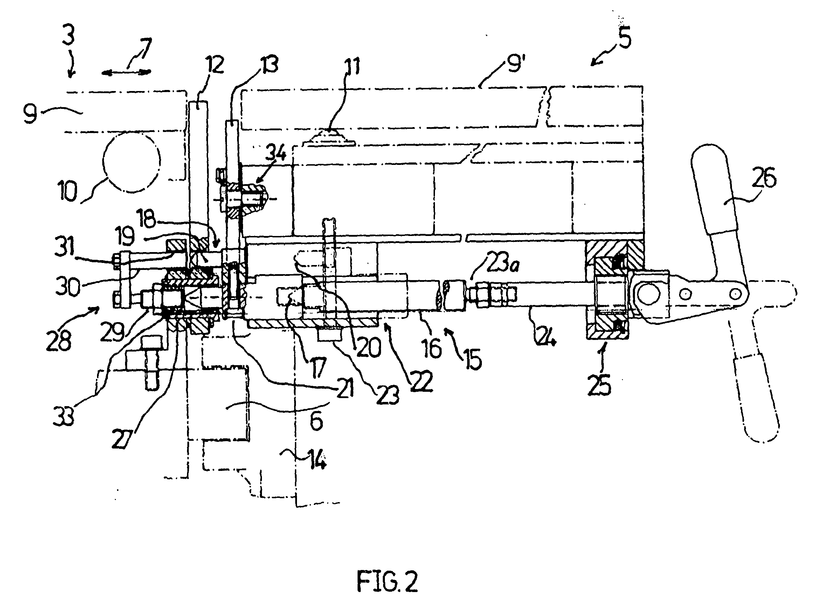

Wie aus Fig. 2 hervorgeht, ist auf jedem der Haltern 3 eine Palette 9 in Form einer Platte in Richtung des Pfeils 7 auf Rollen 10 hin und her bewegbar. Auf die Transporteinrichtung 5 überführte Paletten 9 sind auf Kugeln 11 gelagert und daher sowohl in Richtung des Pfeils 4 als auch des Pfeils 7 beweglich.

Die Paletten 9 sind auf den Haltern 3 jeweils durch eine verschwenkbare Sperrklinke 12 gesichert.

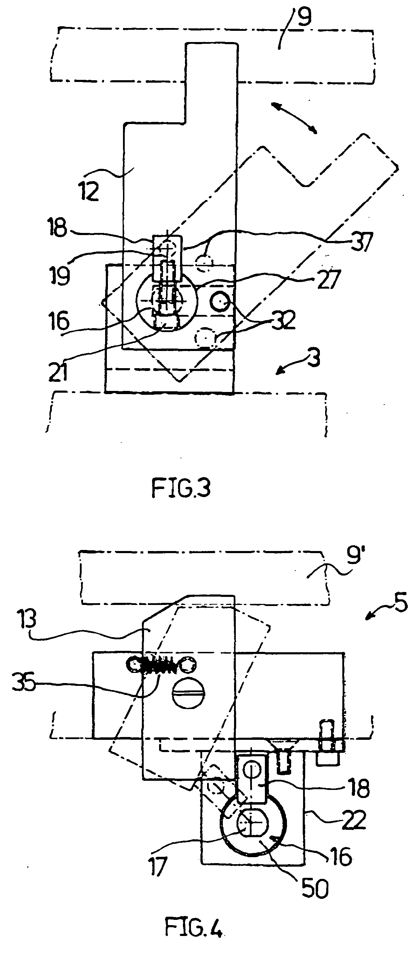

Zur Sicherung einer auf die Transporteinrichtung 5 überführten Palette 9' dient eine verschwenkbare Sperrklinke 13. Die Sperrklinken 12 und 13 sind in den Fig. 3 und 4 jeweils in einer zu den Ansichten in Fig. 2 senkrechten Seitenansicht gezeigt.

Wie Fig. 2 ferner erkennen lässt, greift die Schlittenführung 6, die in Form einer Schiene ausgebildet ist, in einen mit der Transporteinrichtung 5 verbundenen Führungsfuß 14 ein.

Der Arretierung der Transporteinrichtung 5 an einem der Halter 3 dient ein quer zur Richtung des Pfeils 4 verschiebbares Verschlusselement 15, das einen Verschlussbolzen 16 mit einer konischen Spitze 17 und einem Ausleger 18 umfasst. Der Ausleger 18 umfasst ferner einen zu dem Verschlussbolzen 16 parallelen Bolzenteil 19 mit einer konischen Spitze 20. Der Ausleger 18 ist über eine Schraube 21 mit dem Verschlussbolzen 16 verbunden.

Für den Verschlussbolzen 16 mit dem Ausleger 18 ist bei 22 eine Führung gebildet, die über Schrauben 23 mit der übrigen Transporteinrichtung 5 verbunden ist.

Das Verschlusselement 15 weist ferner ein bei 23a mit dem Verschlussbolzen 16 verbundenes Endstück 24 auf, das bei 25 drehbar an der Transporteinrichtung 5 gelagert ist.

Das drehbar gelagerte Endstück 24 ist mit einem Griff 26 versehen, durch den sich das Verschlusselement 15 in Richtung des Pfeils 7 hin- und herschieben und, in einer Stellung, in welcher der Ausleger 18 aus der Führung 22 ausgetreten ist, um die Achse des Verschlussbolzens 16 drehen lässt.

Die Sperrklinken 12 sind jeweils drehbar auf einer mit dem betreffenden Halter 3 verbundenen Hülse 27 gelagert, in welche ein bügelförmiges Arretierungselement 28 mit einem ihrer Schenkel 29 eingreift. Der andere Schenkel 30 des Arretierungselements 28 ist bei 31 geführt und greift in der Arretierungsposition in eine Öffnung 32 in der Sperrklinke 12 ein. (In Fig. 2 ist die Führung 31 um 90° zu ihrer tatsächlichen Anordnung versetzt gezeigt.)

Der Schenkel 29 des bügelförmigen Arretierungselements 28 und damit das gesamte Arretierungselement 28 lässt sich in Richtung der Hülsenachse gegen die Rückstellkraft einer Feder 33 verschieben.

Im Normalfall greift der Schenkel 30 des bügelförmigen Arretierungselements 28 in die Öffnung 32 in der Sperrklinke 12 ein. Damit ist die Sperrklinke in der in Fig. 3 gezeigten Position arretiert. Eine auf dem betreffenden Halter 3 angeordnete Palette 9 ist gesichert.

Die Sperrklinke 13 ist an der Transporteinrichtung 5 bei 34 drehbar gelagert und durch eine Feder 35 beaufschlagt, die an einem Ende mit der Sperrklinke 13 und am anderen Ende ortsfest mit der übrigen Transporteinrichtung 5 verbunden ist.

Soll eine Palette 9 von dem betreffenden Halter 3 abtransportiert und zu der Koordinatenmessmaschine 1 befördert werden, so wird die Transporteinrichtung 5 vor den betreffenden Halter 3 gefahren und der Handgriff 26 betätigt. Die Konusspitze 17 des Verschlussbolzens 16 sorgt dafür, dass der Bolzen 16 leicht in die Hülse 27 einführbar ist. Nach der Einführung des Bolzens 16 ist die Transporteinrichtung 5 genau in einer Überführungsposition angeordnet. Durch den Vorschub des Bolzens 16 mit Hilfe des Handgriffs 26 wird der Schenkel 29 des bügelförmigen Arretierungselements 28 in Richtung des Pfeils 7 verschoben und der Schenkel 31 aus der Öffnung 32 in der Sperrklinke 12 entfernt. Die Arretierung der Sperrklinke ist damit gelöst. Bei der Drehung des Handgriffs 26 um die Längsachse des Bolzens 16 bzw. die Achse der Hülse 27 dreht der während des Vorschubs in die Öffnung 37 in der Sperrklinke 12 eingetretene Bolzenteil 19 des Auslegers 18 die Sperrklinke 12 mit, so dass sie in die in Fig. 3 gezeigte, durch Strichpunktlinien angedeutete Position gelangt.

Bei dieser Drehung verschwenkt der Ausleger 18 gleichzeitig die Sperrklinke 13 gegen die Rückstellkraft der Feder 35 und bringt sie in die in Fig. 4 durch Strichpunktlinien angedeutete Position. Die mit Messobjekten bestückte Palette 9 ist damit freigegeben und kann von dem betreffenden Halter 3 auf die Transporteinrichtung 5 überführt werden, wobei die Rollen 10 und Kugeln 11 zum Einsatz kommen.

Nach Überführung der Palette 9 auf die Transporteinrichtung 5 erfolgt eine Rückdrehung des Handgriffs 26, womit die Sperrklinken 12 und 13 automatisch wieder in ihre in den Fig. 3 und 4 gezeigten Positionen gelangen. Nach Rückbewegung des Verschlusselements 15 in Richtung des Pfeils 7 wird der Schenkel 30 des Arretierungselements 28 durch die Feder 33 wieder in die Öffnung 32 gedrückt und der Ausgangszustand wieder hergestellt. Die überführte Palette 9' ist nun durch die Sperrklinke 13 auf der Transporteinrichtung 5 gesichert.

Vorteilhaft sichert die Verbindung bei 23, dass bei unterschiedlichen Breitenabmessungen von Transporteinrichtungen 5 lediglich entsprechend unterschiedlich lange Verschlussbolzen eingesetzt werden müssen, alle übrigen Teile der Vorrichtung aber beibehalten werden können.

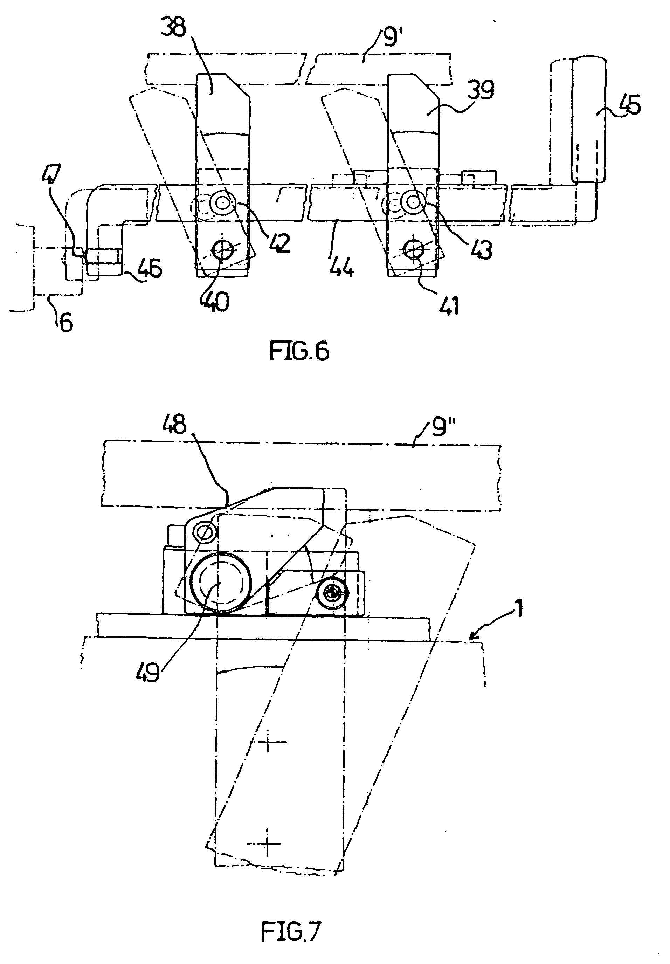

Wie aus Fig. 6 und 7 hervorgeht, ist die auf die Transporteinrichtung 5 überführte Palette 9' nicht nur in Richtung zu der Reihenanordnung 2 hin durch die Sperrklinke 13 gesichert. An der der Messmaschine 1 zugewandten Seite der Transporteinrichtung 5 sind weitere Klinken 38 und 39 vorgesehen, die bei 40 und 41 verschwenkbar mit der Transporteinrichtung 5 verbunden und bei 42 und 43 an eine Schubstange 44 angelenkt sind, welche sich in Richtung des Pfeils 7 hin- und herbewegen lässt. Die Schubstange 44 weist an einem Ende einen Handgriff 45 und am anderen Ende eine Abwinklung 46 zur Bildung eines Anschlags 47 auf, welcher gegen die Schlittenführung 6 anliegt.

Der Anschlag 47 verhindert, dass die Schubstange 44 betätigt werden kann, solange die Transporteinrichtung nicht über das Ende der Schlittenführung 6 hinaus in Richtung zu der Koordinatenmessmaschine 1 vorgefahren ist, und sich in der Übergabeposition für die Überführung der Palette 9' auf die Koordinatenmessmaschine befindet. Erst in dieser Position lässt sich die Schubstange 44 so bewegen, dass die Sperrklinken 38 und 39 in die durch Strichpunktlinien angedeuteten Positionen verschwenkt und die Palette 9' zur Überführung auf die Koordinatenmessmaschine freigegeben ist.

Wie Fig. 7 erkennen lässt, kann durch die Bewegung der Sperrklinke 38 bzw. 39 jeweils auch eine Sperrklinke 48 geöffnet werden, welche auf die Koordinatenmessmaschine überführte Paletten 9" sichert.

Die bei 49 verschwenkbar mit der Koordinatenmessmaschine 1 verbundene Sperrklinke 48 lässt sich durch Verschwenkung der Sperrklinke 38 bzw. 39 in die in Fig. 7 durch Strichpunktlinien angedeutete Position verschwenken, in welcher die Sperrung durch die Klinken 38,39 aufgehoben ist und sich die Palette 9' auf die Koordinatenmessmaschine 1 überführen lässt. Nach Rückverschwenkung der Sperrklinken 38 und 39 gelangt die Sperrklinke 48 wieder in die in Fig. 7 gezeigte Sperrposition.

## Patentansprüche

1. Vorrichtung zur Beschickung einer Koordinatenmessmaschine (1) mit Messobjekte tragenden Paletten (9), wobei die Vorrichtung eine Reihenanordnung (2) von Haltern (3) für die Paletten (9) und eine entlang der Reihenanordnung (2) bewegbare Transporteinrichtung (5) zur Beförderung der Paletten (9) von den Haltern (3) zu der Koordinatenmessmaschine (1) aufweist und die Paletten (9) auf die bei dem betreffenden Halter (3) angeordnete Transporteinrichtung (5) überführbar sind,
**gekennzeichnet durch** eine die Transporteinrichtung (5) in der jeweiligen Überführungsposition festlegende Verschlusseinrichtung.

2. Vorrichtung nach Anspruch 1,
**dadurch gekennzeichnet,**
**dass** sich durch Betätigung der Verschlusseinrichtung eine die Palette (9) auf dem betreffenden Halter (3) festlegende Sperre (12,28,32,33) automatisch öffnen lässt.

3. Vorrichtung nach Anspruch 1 oder 2,
**dadurch gekennzeichnet,**
**dass** die Verschlusseinrichtung ein quer zur Bewegungsrichtung der Transporteinrichtung (5) in einer Führung (22) an der Transporteinrichtung (5) verschiebbares Verschlusselement (15) aufweist, welches bei Eingriff in eine Öffnung an dem betreffenden Halter (3) die Bewegung der Transporteinrichtung (5) entlang der Reihenanordnung (1) verhindert.

4. Vorrichtung nach Anspruch 3,
**dadurch gekennzeichnet,**
**dass** das Verschlusselement (15) in einer vorgeschobenen Position drehbar ist und die Sperre (12,28,32,33) eine durch die Drehung des Verschlusselements (15) verschwenkbare Sperrklinke (12) umfasst.

5. Vorrichtung nach Anspruch 4,
**dadurch gekennzeichnet,**
**dass** sich durch Verschiebung des Verschlusselements (15) ein die Verschwenkung der Sperrklinke (12) verhinderndes Arretierungselement (28) unter Freigabe der Sperrklinke (12) zur Verschwenkung verschieben lässt.

6. Vorrichtung nach Anspruch 5,
**dadurch gekennzeichnet,**
**dass** das Arretierungselement (28) gegen die Rückstellkraft einer Feder (33) verschiebbar ist.

7. Vorrichtung nach Anspruch 5 oder 6,
**dadurch gekennzeichnet,**
**dass** das Verschlusselement (15) einen Verschlussbolzen (16) mit einem bei Drehung des Verschlusselements (15) die Sperrklinke (12) verschwenkenden Ausleger (18) umfasst.

8. Vorrichtung nach Anspruch 6 oder 7,
**dadurch gekennzeichnet,**
**dass** die Drehachse des Verschlusselements (15) und die Schwenkachse der Sperrklinke (12) zusammenfallen.

9. Vorrichtung nach einem der Ansprüche 4 bis 8,
**dadurch gekennzeichnet,**
**dass** die Öffnung an dem betreffenden Halter (3), in welche hinein das Verschlusselement (15) vorschiebbar ist, durch eine zur Schwenkachse der Sperrklinke (12) koaxiale Hülse (27) gebildet ist.

10. Vorrichtung nach Anspruch 9,
**dadurch gekennzeichnet,**
**dass** das Arretierungselement (28) bügelförmig ausgebildet ist, wobei ein Bügelschenkel (29) in die Hülse (27) eingreift und der andere Bügelschenkel (30) zum Eingriff in eine im Abstand von der Schwenkachse der Sperrklinke (12) angeordnete Öffnung (32) in der Sperrklinke (12) vorgesehen ist.

11. Vorrichtung nach einem der Ansprüche 1 bis 10,
**dadurch gekennzeichnet,**
**dass** an der Transporteinrichtung (5) auf der der Reihenanordnung (2) gegenüberliegenden Seite eine Sperre (13) zur Sicherung auf die Transporteinrichtung (5) überführter Paletten (9') vorgesehen ist.

12. Vorrichtung nach Anspruch 11,
**dadurch gekennzeichnet,**
**dass** die Sperre (13,35) eine Sperrklinke (13) aufweist, welche sich durch das Verschlusselement bei dessen Drehung gleichzeitig mit der erstgenannten Sperrklinke (12) gegen die Rückstellkraft einer Feder (35) verschwenken lässt.

13. Vorrichtung nach einem der Ansprüche 1 bis 12,
**dadurch gekennzeichnet,**
**dass** auf der der Messmaschine (1) zugewandten Seite der Transporteinrichtung (5) eine weitere Sperre zur Sicherung auf die Transporteinrichtung überführter Paletten (9') vorgesehen ist.

14. Vorrichtung nach Anspruch 13,
**dadurch gekennzeichnet,**
**dass** die Sperre wenigstens eine an die Transporteinrichtung (5) angelenkte Sperrklinke (38,39) aufweist, welche durch eine Schubstange (44) verschwenbkar ist.

15. Vorrichtung nach Anspruch 14,
**dadurch gekennzeichnet,**
**dass** die Schubstange (44) einen Anschlag (37) aufweist, welcher eine Betätigung der Schubstange (44) verhindert, bis die Transporteinrichtung (5) die Überführungsposition an der Messmaschine (1) erreicht hat.

16. Vorrichtung nach Anspruch 15,
**dadurch gekennzeichnet,**
**dass** durch die Sperrklinke (38,39) auf der der Koordinatenmessmaschine (1) zugewandten Seite der Transporteinrichtung (5) eine auf die Messmaschine (1) überführte Paletten (9") sichernde Sperrklinke (48) betätigt werden kann.

## Claims

1. Device for charging a coordinate measuring machine (1) with pallets (9) carrying test objects, the device having a row arrangement (2) of holders (3) for the pallets (9) and a transport device (5), movable along the row arrangement (2), for transporting the pallets (9) from the holders (3) to the coordinate measuring machine (1), and the pallets (9) being transferable to the transport device (5) disposed next to the particular holder (3), **characterized by** a locking mechanism which fixes the transport device (5) in the respective transfer position.

2. Device according to Claim 1, **characterized in that** a blocking mechanism (12, 28, 32, 33) which fixes the pallet (9) on the particular holder (3) can open automatically through actuation of the locking mechanism.

3. Device according to Claim 1 or 2, **characterized in that** the locking mechanism has a locking element (15) which is displaceable in a guide (22) on the transport device (5) transversely to the motional direction of the transport device (5) and which, when engaging in an opening on the particular holder (3), prevents the transport device (5) from moving along the row arrangement (1).

4. Device according to Claim 3, **characterized in that** the locking element (15), in an advanced position, is rotatable, and the blocking mechanism (12, 28, 32, 33) comprises a blocking pawl (12) which can be pivoted by the rotation of the locking element (15).

5. Device according to Claim 4, **characterized in that**, through displacement of the locking element (15), a detent element (28) which prevents the pivoting of the blocking pawl (12) can be displaced, freeing the blocking pawl (12) to pivot.

6. Device according to Claim 5, **characterized in that** the detent element (28) is displaceable counter to the restoring force of a spring (33).

7. Device according to Claim 5 or 6, **characterized in that** the locking element (15) comprises a locking bolt (16) having an extension arm (18) which, upon rotation of the locking element (15), pivots the blocking pawl (12).

8. Device according to Claim 6 or 7, **characterized in that** the rotational axis of the locking element (15) and the pivot axis of the blocking pawl (12) coincide.

9. Device according to one of Claims 4 to 8, **characterized in that** the opening on the particular holder (3), into which the locking element (15) is displaceable, is formed by a sleeve (27) coaxial with the pivot axis of the blocking pawl (12).

10. Device according to Claim 9, **characterized in that** the detent element (28) is of bow-shaped configuration, one bow arm (29) engaging in the sleeve (27) and the other bow arm (30) being provided for engagement in an opening (32) in the blocking pawl (12), which opening is disposed at a distance from the pivot axis of the blocking pawl (12).

11. Device according to one of Claims 1 to 10, **characterized in that** on the transport device (5), on the side lying opposite the row arrangement (2), there is provided a blocking mechanism (13) for the securement of pallets (9') transferred onto the transport device (5).

12. Device according to Claim 11, **characterized in that** the blocking mechanism (13, 35) has a blocking pawl (13), which can be pivoted by the locking element, upon the rotation thereof, simultaneously with the first-named blocking pawl (12), counter to the restoring force of a spring (35).

13. Device according to one of Claims 1 to 12, **characterized in that**, on that side of the transport device (5) which is facing the measuring machine (1), there is provided a further blocking mechanism for the securement of pallets (9') transferred onto the transport device.

14. Device according to Claim 13, **characterized in that** the blocking mechanism has at least one blocking pawl (38, 39), articulately attached to the transport device (5), which can be pivoted by a push rod (44).

15. Device according to Claim 14, **characterized in that** the push rod (44) has a stop (37) which prevents the push rod (44) from being actuated until the transport device (5) has reached the transfer position on the measuring machine (1).

16. Device according to Claim 15, **characterized in that** a blocking pawl (48) which secures pallets (9") transferred onto the measuring machine (1) can be actuated by the blocking pawl (38, 39) on that side of the transport device (5) which is facing the coordinate measuring machine (1).

## Revendications

1. Dispositif pour alimenter une machine de mesure de coordonnées (1) en palettes (9) portant des objets à mesurer, le dispositif présentant une disposition en série (2) de supports (3) pour les palettes (9) et un dispositif de transport (5) mobile le long de la disposition en série (2) pour le transport des palettes (9) des supports (3) vers la machine de mesure des coordonnées (1) et les palettes (9) étant transférables sur le dispositif de transport (5) disposé au niveau du support (3) concerné, **caractérisé par** un dispositif de verrouillage fixant le dispositif de transport (5) dans chaque position de transfert.

2. Dispositif selon la revendication 1, **caractérisé en ce qu'**un dispositif de blocage (12, 28, 32, 33) fixant la palette (9) sur le support (3) concerné est ouvert automatiquement en actionnant le dispositif de verrouillage.

3. Dispositif selon la revendication 1 ou 2, **caractérisé en ce que** le dispositif de verrouillage présente un élément de verrouillage (15) pouvant être déplacé transversalement par rapport au sens du déplacement du dispositif de transport (5) dans un dispositif de guidage (22) sur le dispositif de transport (5), ledit élément de verrouillage empêchant, en s'agrippant dans une ouverture sur le support (3) concerné, le mouvement du dispositif de transport (5) le long de la disposition en série (1).

4. Dispositif selon la revendication 3, **caractérisé en ce que** l'élément de verrouillage (15) peut être pivoté dans une position avancée et le dispositif de blocage (12, 28, 32, 33) comprend un cliquet de blocage (12) pouvant être pivoté par la rotation de l'élément de verrouillage (15).

5. Dispositif selon la revendication 4, **caractérisé en ce qu'**un élément d'arrêt (28) empêchant le pivotement du cliquet de blocage (12) peut être déplacé par le déplacement de l'élément de verrouillage (15) avec libération du cliquet de blocage (12) pour le pivotement.

6. Dispositif selon la revendication 5, **caractérisé en ce que** l'élément d'arrêt (28) peut être déplacé contre une force de rappel d'un ressort (33).

7. Dispositif selon la revendication 5 ou 6, **caractérisé en ce que** l'élément de verrouillage (15) comprend un boulon de verrouillage (16) avec un bras (18) pivotant le cliquet de blocage (12) lors de la rotation de l'élément de verrouillage (15).

8. Dispositif selon la revendication 6 ou 7, **caractérisé en ce que** l'axe de rotation de l'élément de verrouillage (15) et l'axe de pivotement du cliquet de blocage (12) se trouvent au même endroit.

9. Dispositif selon l'une quelconque des revendications 4 à 8, **caractérisé en ce que** l'ouverture sur le support (3) concerné, dans laquelle l'élément de verrouillage (15) peut être avancé, est formée par un manchon (27) coaxial avec l'axe de pivotement du cliquet de blocage (12).

10. Dispositif selon la revendication 9, **caractérisé en ce que** l'élément d'arrêt (28) est réalisé en forme d'étrier, une branche (29) de l'étrier s'agrippant dans le manchon (27) et l'autre branche (30) de l'étrier étant prévue pour un agrippement dans une ouverture (32) dans le cliquet de blocage (12) disposée à une certaine distance de l'axe de pivotement du cliquet de blocage (12).

11. Dispositif selon l'une quelconque des revendications 1 à 10, **caractérisé en ce qu'**un dispositif de blocage (13) pour assurer les palettes (9') transférées sur le dispositif de transport (5) est prévu sur le dispositif de transport (5) sur le côté face à la disposition en série (2).

12. Dispositif selon la revendication 11, **caractérisé en ce que** le dispositif de blocage (13, 35) présente un cliquet de blocage (13) qui peut être pivoté par l'élément de verrouillage, lors de sa rotation, simultanément avec le premier cliquet de blocage (12) mentionné contre la force de rappel d'un ressort (35).

13. Dispositif selon l'une quelconque des revendications 1 à 12, **caractérisé en ce qu'**on a prévu, sur le côté orienté vers la machine de mesure (1) du dispositif de transport (5) un autre dispositif de blocage pour assurer les palettes (9') transférées sur le dispositif de transport.

14. Dispositif selon la revendication 13, **caractérisé en ce que** le dispositif de blocage présente au moins un cliquet de blocage (38, 39) articulé sur le dispositif de transport (5) qui peut être pivoté par une bielle (44).

15. Dispositif selon la revendication 14, **caractérisé en ce que** la bielle (44) présente une butée (37) qui empêche d'actionner la bielle (44) jusqu'à ce que le dispositif de transport (5) ait atteint la position de transfert sur la machine de mesure (1).

16. Dispositif selon la revendication 15, **caractérisé en ce qu'**on peut actionner un cliquet de blocage (48) assurant les palettes (9") transférées sur la machine de mesure (1) par le cliquet de blocage (38, 39) sur le côté orienté vers la machine de mesure des coordonnées (1) du dispositif de transport (5).
